(19) Europäisches Patentamt / European Patent Office / Office européen des brevets

(11) **EP 4 209 775 B1**

(12) **EUROPEAN PATENT SPECIFICATION**

(45) Date of publication and mention of the grant of the patent:
**29.10.2025 Bulletin 2025/44**

(21) Application number: **22150396.4**

(22) Date of filing: **05.01.2022**

(51) International Patent Classification (IPC):
**G01N 3/06** (2006.01) **G01N 3/10** (2006.01)
**G01N 15/14** (2024.01) **G01N 11/08** (2006.01)
**G01N 15/00** (2024.01) **G01N 15/10** (2024.01)

(52) Cooperative Patent Classification (CPC):
**G01N 15/1459; G01N 3/068; G01N 3/10;**
**G01N 11/08; G01N 15/1433; G01N 15/1484;**
G01N 15/01; G01N 2015/1006; G01N 2015/1027;
G01N 2015/1495; G01N 2015/1497;
G01N 2203/0003; G01N 2203/0025;
G01N 2203/0048; G01N 2203/0089;     (Cont.)

(54) **METHOD FOR DETERMINING A NUMBER OF VISCOELASTIC PROPERTIES OF A NUMBER OF PARTICLES IN A SUSPENSION, DEVICE FOR SUCH A METHOD AND COMPUTER PROGRAM OR COMPUTER PROGRAM PRODUCT**

VERFAHREN ZUR BESTIMMUNG EINER ANZAHL VISKOELASTISCHER EIGENSCHAFTEN EINER ANZAHL VON PARTIKELN IN EINER SUSPENSION, VORRICHTUNG FÜR EIN SOLCHES VERFAHREN UND COMPUTERPROGRAMM ODER COMPUTERPROGRAMMPRODUKT

PROCÉDÉ PERMETTANT DE DÉTERMINER UN NOMBRE DE PROPRIÉTÉS VISCOÉLASTIQUES D'UN NOMBRE DE PARTICULES DANS UNE SUSPENSION, DISPOSITIF POUR UN TEL PROCÉDÉ ET PROGRAMME INFORMATIQUE OU D'UN PRODUIT-PROGRAMME INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.07.2023 Bulletin 2023/28**

(73) Proprietor: **Friedrich-Alexander-Universität Erlangen-Nürnberg**
**91054 Erlangen (DE)**

(72) Inventors:
• **FABRY, Ben**
  **91054 Erlangen (DE)**
• **GERUM, Richard**
  **91054 Erlangen (DE)**
• **GEKLE, Stephan**
  **Bayreuth (DE)**

(74) Representative: **FDST Patentanwälte**
**Nordostpark 16**
**90411 Nürnberg (DE)**

(56) References cited:
**JP-A- H0 368 867**

• **DE LOUBENS CLÉMENT ET AL: "Tank-treading of microcapsules in shear flow Tank-treading of microcapsules in shear flow", JOURNAL OF FLUID MECHANICS, 26 January 2016 (2016-01-26), pages 750 - 767, XP055929391, Retrieved from the Internet <URL:https://hal.archives-ouvertes.fr/hal-02020215/file/TankTreading_Capsule_JFluidMech2016.pdf> [retrieved on 20220609], DOI: https://doi.org/10.1017/jfm.2015.758**
• **UNKNOWN: "Shear Stress and Shear Rates for ibidi -Slides Based on Numerical Calculations", 14 March 2022 (2022-03-14), pages 1 - 28, XP093183862, Retrieved from the Internet <URL:https://ibidi.com/img/cms/support/AN/AN11_Shear_stress.pdf> [retrieved on 20240709]**

**(Cont. next page)**

(52) Cooperative Patent Classification (CPC): (Cont.)
G01N 2203/0094; G01N 2203/0218;
G01N 2203/0276; G01N 2203/0647;
G01N 2203/0682

**Description**

The invention relates to a method for determining a number of viscoelastic properties of a number of particles, such as cells, in a suspension. Further described are a device for such a method, as well as a computer program or computer program product.

Numerous cell functions are accompanied by phenotypic changes in viscoelastic properties, and measuring these can help elucidate higher-level cellular functions in health and disease. Viscoelastic cell properties may be measured with methods such as atomic force microscopy (AFM), micropipette aspirations or magnetic tweezer microrheology. These methods, however, have a relatively low throughput of typically below 10 - 100 cells/h and there is a need to measure cell mechanical properties with high throughput. This led to the development of various microfluidic techniques, e.g. as described in Gossett et al., "Hydrodynamic stretching of single cells for large population mechanical phenotyping", National Academy of Sciences, 2012. 109: p. 6, Otto et al., "Real-time deformability cytometry: on-the-fly cell mechanical phenotyping", Nat Methods, 2015. 12(3): p. 199-202, 4 p following 202, Panhwar et al., "High-throughput cell and spheroid mechanics in virtual fluidic channels", Nature Communications, 2020. 11(1), Qi et al., "Screening cell mech-anotype by parallel microfiltration", Scientific Reports, 2015. 5, Lange et al., "Mi-croconstriction Arrays for High-Throughput Quantitative Measurements of Cell Mechanical Properties", Biophys J, 2015. 109(1): p. 26-34, Lange et al., "Unbiased High-Precision Cell Mechanical Measurements with Microconstrictions", Biophys J, 2017. 112(7): p. 1472-1480.

Due to the usually small channel geometry of these microfluidic systems, the acting stresses that deform the cells are difficult to estimate, often depend on the viscosity of the suspension medium and moreover vary largely across the cell surface, leading to complex cell deformations (such as bullet-like cell shapes). Moreover, high throughput is typically achieved by deforming the cells for a very short time in the milli- and sub-millisecond range, which implies that viscous cell properties start to dominate. As a consequence, the quantification of mechanical cell properties depends on numerous model assumptions, the most frequent and simplifying being the assumption that cells deform as an elastic solid.

Reference is also made to De Loubens Clement ET AL: "Tank-treading of microcapsules in shear flow Tank-treading of microcapsules in shear flow", Journal of Fluid Mechanics, 26 January 2016 (2016-01-26), pages 750-767, XP055929391, DOI: https://doi.org/10.1017/jfm.2015.758, and the article "Shear Stress and Shear Rates for ibidi-Slides Based on Numerical Calculations" (Application Note 11). Further reference is made to EP 3 036 520 B1, DE 10 2017 008 946 A1, DE 10 2018 221 232 A1, JP H03 68867 A.

Against this background, it is an object of the invention to provide an improved method for determining viscoelastic properties of particles, in particular cells, in a suspension. In particular, determining viscoelastic properties of particles in a suspension shall be achieved, as opposed to only determining elastic properties of such particles. Furthermore, the method and a corresponding device shall allow for a throughput as large as possible and shall be as cost efficient and as simple in design as possible. Further objectives are apparent from the following description.

One or several objectives are solved by the subject matter as claimed in the claims and as described in the following text. Further solutions and preferred embodiments are described in the following text as well. Any description of the method also applies to a corresponding device and computer program or computer program product and vice versa. As far as aspects and in particular steps of the method are described, preferred embodiments for the device are such that the device is configured to execute one or more of these steps, in particular by way of a control unit or other unit, and correspondingly preferred embodiments for the computer program or computer program product are such that the computer program or computer program product comprises instructions to cause a computer to execute these one or more steps corresponding to this aspect or step.

A key aspect of the method according to the present invention and of the corresponding device is a particular way of determining viscoelastic properties of particles in suspension and a corresponding design choice for the device used in this method to enable said way. Viscoelastic properties (i.e. parameters), in particular, are particle stiffness and particle fluidity (which is related to the "particle viscosity") as described in Eqs. 12 and 13 further below. A particular advantage of the present invention is, that these viscoelastic properties are entirely derived from basic parameters easily accessible via an analysis of images of the particles on the one hand and on the other hand global parameter, in particular, dimensions of and pressure in the device, which are equally easily accessible parameters. Advantageously, the device allows for the measurement and, hence, quantification of particle strain, particle alignment and particle tank-treading in response to a well-defined fluid shear stress and shear rate, which are ensured via a specific design of the device. From these measurements, the viscoelastic properties of the particles are computed using a suitable theoretical model. The analysis of the images and the determination of the viscoelastic properties are either performed by the device itself or partly or entirely performed on a separate device, e.g. a computer. The device or computer are, then, configured to execute the instructions from the computer program or computer program product as described herein.

In this application, it is illustrated how to compute the viscoelastic properties of the measured particles based on a theory developed by R. Roscoe, the so called "Roscoe theory". Said Roscoe theory is described in detail in Roscoe, R., "On the rheology of a suspension of viscoelastic spheres in a viscous liquid", J.Fluid Mechanik, 1967: p. 21). In short, the Roscoe theory describes the deformation of incompressible, homogenous, isotropic linear viscoelastic spheres suspended in an incompressible fluid under steady laminar flow. Although the Roscoe theory is preferred, the invention is not limited to this theory as other theories may also be applied. In any case, it is a particular advantage of the subject matter described herein that it allows certain assumptions and thereby enables using a particularly simple and efficient theoretical framework, in particular the Roscoe theory, for ultimately computing the viscoelastic properties.

In general, the method is used for determining a number of viscoelastic properties, in particular stiffness and fluidity, of a number of particles of a suspension. The suspension comprises a suspension medium, in which the particles are suspended. Said suspension is fed through a channel, said channel extending in a longitudinal direction and having a lateral extension perpendicular to said longitudinal direction. Images from the particles in the channel are recorded with an imaging unit and in an imaging plane, i.e. the imaging unit records images, which lie in an imaging plane inside the channel, such that particles fed through the channel are recorded on said images. The imaging plane is preferably parallel to the longitudinal direction.

As part of the method, a number of particle properties are determined by analyzing the images and deriving the viscoelastic properties of the particles from said particle properties. The details of the corresponding computations are not particularly important at this point, but preferred embodiments and advantageous aspects are discussed in detail further below.

Analyzing the images is preferably performed by an analyzing unit, e.g. a computer, to which the images are send via a suitable communications connection. The images are either sent directly to the analysis unit for real-time analysis or, alternatively, the images are stored in a storage of the device or analysis unit for later analysis.

In particular, the channel and the imaging unit are parts of a corresponding device for determining a number of viscoelastic properties of a number of particles of a suspension.

More importantly, the particles inside the channel are exposed to a shear stress deforming a shape, i.e. an outer contour of a respective particle depending on its distance to a channel center. In other words: a respective particle has a shape which is deformed by the shear stress acting on said particle, the extent or degree of deformation depending on said particle's distance to the channel center. The channel, then, is configured such that the shear stress across a respective particle varies by at most a maximum variation, for enabling a linear approximation of the shear stress when deriving the viscoelastic properties. In other words: the channel is designed such that certain assumptions and/or simplifications can be made when computing the viscoelastic properties. By the described limitation via the the maximum variation, the shear stress across a respective particle can be and preferably also is assumed to be linear and more preferably even constant. The maximum variation is measured across a given particle in a lateral direction, i.e. perpendicular to the longitudinal direction. In a preferred embodiment, the maximum variation is at most 10% (e.g. 10% of the shear stress at a center of the particle or 10% of the average shear stress across the particle, e.g. computed as the difference between the two values of the shear stress on opposite sides of the particle).

The method described here is not a method for treatment of the human or animal body by surgery or therapy and diagnostic methods practiced on the human or animal body. On the contrary, the method shown here is a method to determine viscoelastic (i.e. mechanical) parameters of particles in a suspension, wherein said particles may be living cells. In any case, said cells are examined with the method outside and - if applicable - removed from the human or animal body.

The device, then, is configured for use in the method as described and comprises a channel and an imaging unit, wherein said channel is configured for feeding through of a suspension comprising a suspension medium, in which a number of particles are suspended, wherein said channel extends in a longitudinal direction and has a lateral extension perpendicular to said longitudinal direction, wherein the imaging unit is configured to record images from the particles in the channel and in an imaging plane, wherein the channel is configured such that the particles are exposed to a shear stress deforming a shape of a respective particle depending on its distance to the channel center, wherein the channel is further configured such that the shear stress across a respective particle varies by at most a maximum variation, for enabling a linear approximation of the shear stress when deriving the viscoelastic properties and as described above in connection with the method.

Correspondingly, the computer program or computer program product comprises instructions to cause a computer (as part of or separate to the device) to execute the steps of receiving images from an imaging unit, used to record a number of images from a number of particles in the channel of the device as described, determining basic parameters of each particle in each image, said basic parameters being a position, a shape, an alignment angle, a tank-treading parameter and a velocity (or a subset thereof), computing derived parameters from the basic parameters, said derived parameters being a shear stress, a shear strain, a viscosity of the suspension medium and a velocity profile (or a subset thereof), computing viscoelastic properties of each particle from the basic parameters and intermediate parameters, the viscoelastic properties preferably being a stiffness and a fluidity. The computations made by the device or computer executing the instructions of the computer program or computer program product benefit from the particular design choice made for the device and specifically the channel, such that the computation is exceptionally simple and efficient and may be performed by a simple PC or similar device (which are preferred embodiments for the computer).

The expression "a number of" is generally understood to mean "at least one" and vice versa. In particular, the term "a number of" also includes the narrower meaning of "a multitude of", which is a preferred embodiment in connection with the images and particles, wherein "a multitude" is preferably understood as comprising at least 100 items, more preferably at least 1000 items.

The terms "particle" and "fluid" used in denoting some parameters, e.g. particle stiffness, particle fluidity, fluid shear stress etc., is occasionally omitted for brevity.

The term "parameter" and "property" are used interchangeably. In some instances, the term "value" is used to denote a specific value of a given parameter.

The channel, as mentioned, extends in a longitudinal direction, which is also a direction of flow of the particles during operation. When fed through the channel, each particle has a velocity in the direction of flow. The channel has an input port, through which the suspension is fed into the channel, and an output port, through which the suspension exits the channel. Preferably, the channel only has a single input port as opposed to embodiments with several input ports. The channel comprises a number of channel walls (i.e. side walls), also extending in the longitudinal direction. The channel also comprises a channel center (i.e. center axis or just "center"), which extends in the longitudinal direction and, in particular, is equidistantly spaced from any channel walls. Preferably, the channel is a microchannel. In an advantageous embodiment, the channel is long, i.e. has a length in the longitudinal direction of several centimeters, preferably of at least or more than 2 cm to 10 cm, e.g. 5.8 cm. Preferably, the channel is straight, i.e. has no windings or turns.

Further, the channel preferably has a large cross section, i.e. a large lateral extension (i.e. dimension) perpendicular to the longitudinal direction. Irrespective of the shape of the channel, the lateral extension is also called "radial extension", in particular when measured from or through the channel center. During operation, the suspension fills the entire cross section such that particles may potentially be found at any position inside the channel. In a suitable embodiment, "large cross section" means that the lateral extension is at least 5 times, at least 10 times or at least 20 times an average diameter of the particles (e.g. larger than 75 $\mu$m in the case of living cells), at least in the imaging plane, but preferably in any lateral direction. **In** another suitable embodiment, "large cross section" is understood to mean that the channel has a lateral extension of more than 75 $\mu$m, e.g. larger than 75 $\mu$m. The lateral extension preferably has an upper limit of 2.5 mm, but may in principle also be larger. In general, the upper limit depends on the size of the particles to be measured, e.g. for spheroids with a diameter of 500 $\mu$m, the channel's lateral extension preferably is at least 5 times larger, i.e. 2.5 mm. In a suitable embodiment, the lateral extension or even every lateral extension is 200 $\mu$m. The cross section is preferably constant along the entire length of the channel. Preferably, the channel is at least 5 times as long as its lateral extension. Advantageously, the channel has a rectangular, preferably square, cross section such that the channel has two lateral extension, namely a height and a width, e.g. both of which are 200 $\mu$m. Without loss of generality, a channel with a square cross section is assumed in the following. A rectangular cross section and more general any cross section with at least one flat or plain channel wall have the advantage of a simplified image acquisition, since such a flat or plain channel wall does not require any additional optical correction.

The dimensions of the channel, i.e. its length and lateral extension (in particular width and height) or cross section, are summarized with the expression "channel geometry". In general, the expressions "shape" and "geometry" are used to summarize parameters characterizing spatial extensions/dimensions, in particular in connection with the channel and the particles.

The channel described here is generally considered to be "large", which advantageously enables use of the Roscoe theory as mentioned further above. Further, the specific channel design used here is less prone to clogging than smaller and/or wound channels. More importantly, though, the large channel leads to the shear stress across a respective particle varying by at most a maximum variation, for enabling a linear approximation of the shear stress when deriving the viscoelastic properties, as described above.

Without loss of generality, the longitudinal direction is also called "x-direction" and the channel laterally extends in a y- and a z-direction, such that the width and height are measured in said y- and z-direction respectively. The x-, y- and z-directions are preferably perpendicular to each other and any two directions form a corresponding plane. Any position in the channel is then described by coordinates x, y and z, wherein it is assumed without loss of generality that x and y are 0 at the channel center. The x and y coordinates for any given particle hence define its lateral distance or radial distance from the center axis, said distance also being denoted as "lateral position" or "radial position". Without loss of generality, it is assumed here that the imaging plane for image acquisition during the method is defined by the x- and y-directions, such that the lateral position equals the y coordinate and any function expressed as function of the lateral position may be denoted as a function of the y coordinate.

The particles preferably have an average diameter between 2 $\mu$m and 500 $\mu$m, in particular depending on the channel width, and more preferably from 5 $\mu$m to 20 $\mu$m, in particular for a channel with a width of 200 $\mu$m. The particles are preferably cells, in particular living cells. The cells are, e.g., blood cells, tumor cells or fibroblasts. Without loss of generality, it is assumed that the particles are cells. The suspension medium preferably is a fluid or viscoelastic solid with a low yield stress, more preferably a linear and/or shear-thinning fluid. Suitable media are an alginate solution, methyl cellulose solution or xanthan gum solution. Particularly preferred are media which are biocompatible and of high molecular weight, such as the mentioned alginate solution.

The particles (more general the entire suspension) are fed, in particular pumped, through the channel. Preferably, the device is configured such that a laminar flow of the suspension along the channel is achieved during operation. In a particularly preferred embodiment, the suspension is fed through the channel with a pressure of 0.5 bar to 6 bar, more preferably 1 bar to 3 bar, which is considered a high pressure, so that the particles are exposed to a fluid shear stress that is sufficiently large to induce measurable particle deformations. In particular, said pressure is a pressure difference between an input port and an output port of the channel. The terms "pressure" and "pressure difference" are used interchangeably to refer to the pressure across the channel, i.e. the pressure difference between input port and output port of the channel. In the alternative (or in addition), the suspension medium is fed through the channel with a pressure gradient in the range of 0.05 bar/cm to 5 bar/cm. The pressure gradient is the pressure divided by the length of the channel. Such a pressure (correspondingly: pressure gradient) also advantageously ensures a suitable shear stress inside the channel. Said shear stress, then, is preferably larger than 50 Pa, at least near or at the channel walls. Such a high pressure also has the advantage of being easily achievable with cost efficient and simple components. The total applied pressure is suitably larger than 50 kPa, in particular in the case of living cells, but lower pressures may also be applied, e.g. in the case of very soft (i.e. < 100 Pa) particles. Correspondingly, larger pressures than indicated above may be suitable given very stiff particles. Also, the choice of pressure depends on the channel length and lateral extension and may, therefore, differ accordingly. Hence, it is preferred that a certain pressure gradient is chosen and fixed and then the pressure adjusted according to the channel's length.

In a suitable embodiment, the device comprises a particle reservoir, from which the suspension is fed to the channel and a corresponding waste reservoir, to which the suspension is fed after exiting the channel. In a suitable embodiment, the suspension is fed using compressed air, which is fed into the particle reservoir, preferably via a pressure regulator and a three-way-valve downstream of said pressure regulator and upstream of the particle reservoir. The pressure regulator is also used to set the pressure to the desired value. Along the channel, the imaging unit is positioned, in particular with a viewing direction perpendicular to the channel and its longitudinal direction, such that an imaging plane of the imaging unit lies within the channel and extends along the longitudinal direction.

The velocity (i.e. flow rate or speed) of the particles is preferably limited by suspending the particles in a suspension medium with a high viscosity. In a suitable embodiment, the suspension medium has a viscosity of more than 0.5 Pas, which is considered high, preferably in the range of 1 Pas to 10 Pas, e.g. 5 Pas, so that the particle deformations and their speed can be measured with a standard CCD or CMOS camera (e.g. at 500 fps) as part of the imaging unit. As such, the viscosity of the suspension medium is in particular chosen with respect of the imaging unit's frame rate or equivalent parameter, the applied pressure, and the desired throughput, as boundary conditions. This leads to a simple and cost efficient method and device. In other words: the viscosity of the suspension medium is chosen such that the velocity of the particles is low enough, preferably smaller than 20 mm/s, so that the particle shape can be captured without motion blur, e.g. at an exposure time of 30 $\mu$s using a standard high frame rate, e.g. 500 Hz, CCD- or CMOS-camera. In principle, there is no lower limit to the velocity aside from practical considerations, e.g. requiring a certain minimum throughput, e.g. at least 0.2 mm/s to ensure economic viability of the method or similar. The suitable viscosity also depends on the applied pressure and channel extensions, however, a viscosity of more than 0.5 Pas as mentioned is generally preferred.

In a particularly advantageous embodiment, the method also comprises determining the rheological properties of the suspension medium, in which the particles are suspended. Said rheological parameters are advantageously determined from various measured or derived parameters such as shear stress and shear rate. In such an embodiment, the device is in addition a capillary rheometer or viscosimeter and the method is in addition a method for determining rheological parameters of a suspension medium. In particular, this possibility arises from the specific theoretical framework used for computing the viscoelastic properties, said framework, in turn, being enabled by the specific design of the device. In a particularly preferred embodiment, then, the viscosity of the suspension medium is determined based on analyzing the images.

The device and method presented here particularly take advantage of one or several of the following physical principles and insights and preferred embodiments are obtained by implementing corresponding design choices for the device and method:

First, a shear stress profile (i.e. the shear stress as a function of the lateral position in the channel or of the distance from the channel center) inside a long channel depends only a) on the pressure gradient along the channel (i.e. in the longitudinal direction), more specifically on the total pressure drop or difference across the channel, which can be precisely controlled, and b) the channel geometry, which is fixed and, therefore, may be used as a design criterium to achieve a specific shear stress profile when manufacturing the device. Importantly, the channel is preferably configured such, that the shear stress profile does not depend on the viscosity of the suspension medium and smoothly (i.e. monotonously) increases from zero at the channel center to a maximum value at the channel wall, so that, accordingly, the particles are circular near the channel center and become increasingly elongated, in particular elliptical, near the channel wall. As already mentioned, the lateral extension of the channel is advantageously chosen to be significantly larger than the average particle diameter, such that the (fluid) shear stress remains approximately constant across the particle, in particular across the particle's surface and/or when measured perpendicular to the channel center, as expressed by limiting the variation across the particle to a maximum variation as already described. Correspondingly, a locally well-defined nearly linear and/or even nearly constant shear stress is applied to the particles to induce a measurable particle strain, suitably a particle strain of more than 0.1. From the stress-strain relationship, the storage modulus of the particle is estimated, which characterizes its elastic behavior.

Second, depending on the velocity profile (i.e. the velocity as a function of the lateral position in the channel or of the distance from the channel center) inside the channel, the particles rotate in a tank-treading manner, similar to a ball that is compressed between two counter-moving parallel plates. In other words: the particles perform an internal rotation. This tank-treading motion is characterized by tank-treading parameter, in particular a rotational speed or frequency which increase with increasing shear rate near the channel wall. The rotational speed or frequency of this tank-treading motion is well-defined in the range between 0.1 Hz and several tens of Hz, i.e. up to 100 Hz, where viscous (dissipative) particle properties are measurable but do not yet dominate the mechanical response. The frequency tends to increase with increasing shear rate near the channel wall, but the viscous particle properties act against tank-treading and resist the further increase of particle strain. Advantageously, the particles in the channel are exposed to a locally well-defined shear rate that induces a measurable or predictable tank-treading particle rotation, preferably in the range of, but not limited to, 0.1 Hz and 100 Hz, more preferably 1 Hz to 20 Hz. In particular, this is achieved by the specific channel design and/or choice of viscosity and/or pressure as already described above. In addition, tank-treading affects how particles align in the flow direction. Tank-treading in combination with the particle's viscous properties leads to energy dissipation, which limits the increase of particle strain at higher stresses near the channel wall. From this behavior and by advantageously measuring the tank-treading frequency and preferably also the alignment angle of the particle with respect to the flow direction, the loss modulus of the particle is determined, which characterizes its viscous, or dissipative, behavior. Without loss of generality, it is assumed in the following that the tank-treading frequency is measured, however, any similar or equivalent parameter, e.g. a theoretically estimated rotational speed, is also suitable.

In a particularly preferred embodiment, the storage and loss moduli are computed by using above mentioned Roscoe theory and the viscoelastic properties are, then, derived from the storage and loss moduli, as will be explained in detail in the following.

For the quantification of particle viscoelastic (and, hence, mechanical) properties, the theoretical framework developed by Roscoe is preferably used. This Roscoe theory describes the deformation of a viscoelastic sphere in a viscous fluid under steady shear flow. The method and device here are especially designed to fulfill these prerequisites, such that the Roscoe theory is applicable and may be implemented by instructions of a computer program or computer program product. This theory allows to compute the stiffness (shear modulus) and fluidity of each particle from five easily measurable parameters. Hence, in a suitable embodiment, the stiffness and fluidity of the particles are computed from the five parameters as described in the following: As a first parameter, the (fluid) shear stress acting on each particle is determined. In a suitable embodiment with a square channel, this is computed based on an extension of Poiseuille's equation to channels with square cross section, see Eq. 2 below. Preferably, the shear stress for a respective particle is computed solely from the pressure over the channel, the channel geometry and the lateral position of the respective particle, which are, in particular, obtained by analyzing the images. As a second parameter, the particle strain (i.e. particle deformation, see Eq. 1 below) is determined from analyzing the images, preferably the particle strain is determined from a respective particle's shape, in particular from its dimensions in the imaging plane, said particle dimensions being obtained by analyzing the images. In a suitable embodiment, this image analysis uses bright-field microscopy images and the corresponding imaging unit comprises a bright-field microscope. As a third parameter, the alignment angle (or just "alignment") of the deformed particle with respect to the flow direction is determined, preferably also from analyzing the images. This alignment angle depends on the ratio between particle viscosity and the viscosity of the suspension medium. As a fourth parameter, the viscosity (in particular as a function of the lateral position) of the preferably shear-thinning suspension medium is computed, see Eq. 5 below. Preferably, the viscoelastic properties are determined at a respective value of a tank-treading parameter of a respective particle and are scaled to a reference for comparison of different particles that have experienced different values of the tank-treading parameter. Since particle stiffness and particle fluidity are dependent on the tank-treading frequency, the tank-treading frequency of each particle is determined as a fifth parameter, preferably via said image analysis or from an empirical relationship as e.g. described in Eq. 8 below. To compare the stiffness and fluidity of particles at different channel positions that have therefore experienced different tank-treading frequencies, the stiffness and fluidity of each particle are suitably scaled to a reference frequency, e.g. 1 rad/s.

The method preferably comprises one, several or all of the following calibration step and first to fourth step.

Preferably prior to any recording of images and suitably in the calibration step, the imaging unit, e.g. a microscope, is precisely focused to a mid-plane of the channel, i.e. to the channel center. In a suitable embodiment, a small pressure (50 Pa to 100 Pa) is applied to the suspended particles and the microscope is focused in phase contrast mode to the bottom of the channel, which can be unambiguously identified by stationary or very slowly flowing small debris. An objective of the microscope is then moved up by half the channel's lateral extension (in this case its height in the z-direction) divided by the refractive index of the suspension medium.

In the first step of the method an imaging unit is used to record a multitude of images from a multitude of particles in the channel, e.g. 1000 to 2000 particles in e.g. 10,000 images, as they flow through a channel, in particular at a constant pressure. Depending on the exact setup of the device and the applied pressure, this typically takes 20 s to 100 s.

The first step of the method is also called "image acquisition". In said first step, images of the particles are recorded with the imaging unit, preferably comprising a camera and objective. Images are preferably recorded perpendicular to the channel's longitudinal direction and, hence, in a plane along the longitudinal direction, e.g. the x-y-plane. Typically, 10,000 images (each e.g. 720 px x 540 px corresponding to 248 $\mu$m x 186 $\mu$m) per measurement are recorded with, e.g. with a simple and cost efficient CMOS camera. Images are preferably recorded at a frame rate of 50 Hz to 500 Hz and with an exposure time of e.g. 30 $\mu$s or. To limit motion blur to less than one pixel, the exposure time is preferably be shorter than the longitudinal field of view of the camera (ROIx), divided by the flow speed at the channel center, divided by the number of pixels of the camera in longitudinal direction. As detailed below in connection with the second step, the velocity is preferably determined by recording in the first step each particle in at least two consecutive images. Therefore, the frame rate is preferably chosen depending on the maximum flow speed and the width of the region of interest (ROIx), namely larger than the ratio of the maximum flow speed and the ROIx. In an exemplary embodiment, the ROIx is 248 $\mu$m, resulting in a maximum flow speed of 41 mm/s for a frame rate of 500 Hz. To prevent motion blur, however, the maximum flow speed is preferably kept at about 20 mm/s. In an alternative embodiment, fluorescent images are recorded in parallel with bright-field images.

In the second step, particle parameters, namely the position (in particular in the imaging plane, i.e. x- and y-position), the elongated and in particular elliptical shape (i.e. parameters quantifying said shape), the alignment angle, the tank-treading parameter and/or the velocity of each particle in each image (frame), are determined. This is preferably done by analyzing the images as described above.

Advantageously, in the second step the channel center is identified from a velocity profile. For this, the velocity is preferably determined by tracking particles over subsequent images and dividing the distance they have moved in the longitudinal direction (i.e. x-direction) by the time difference between images. A velocity profile obtained that way is also called a "measured velocity profile". Preferably, a polynomial of the form

$$v(y) = v_{\max}\left(1 - \left|\frac{y - y_c}{W/2}\right|^\zeta\right)$$

is then fitted to the velocity profile to identify the channel center $y_c$, with the maximum velocity $v_{\max}$ at the channel center as a second fit parameter, and the exponent $\zeta$ as a third fit parameter. W is the channel width (measured in the y-direction). The fit parameter $y_c$ is then used to shift the image y-coordinate origin to the channel center. This procedure ensures that the channel does not need to be precisely centered in the imaging unit's field of view during recordation of the images. However, the channel should be aligned as precisely as possible with the field of view.

The second step is also called "image analysis" and comprises analyzing the images. Particle parameters determined in the second step preferably include the semi-major axis a and semi-minor axis b, both parallel to the imaging plane. Determining the semi-minor axis c in the z-direction is optional and is not necessary for incompressible particles, which are preferably used. In a suitable embodiment, the images are normalized by subtracting the mean and dividing by the standard deviation of the pixel intensities. Advantageously, a neural network as part of the analysis unit is trained on labeled images of different particle types and suspension media. The neural network, then, detects an outline of the particle and generates a binary mask, to which an ellipse is fitted, hereby determining x- and y- positions of the ellipse center, the ellipse's semi-major axis a and semi-minor axis b, and an alignment angle $\beta$ of the semi-major axis a with respect to the flow direction (i.e. the x-direction). Binary masks that do not conform to an elliptical shape based e.g. on circumference or solidity criteria (e.g. due to particle doublets or erroneous particle outlines due to poor image contrast) are discarded.

In a third step of the method, derived parameters, namely the (local, i.e. as function of the y-position) shear stress, (local) shear rate, the (local) viscosity of the suspension medium, and/or a more accurate (here called "fitted") velocity profile, are computed.

Suspended particles under zero shear stress have an approximately circular shape with radius $r_0$. When exposed to constant shear stress, the particle deforms to an elliptical shape with normalized semi-major axis $\tilde{a} = a/r_0$ and semi-minor axes $\tilde{b} = b/r_0$ (in x,y-direction) and $\tilde{c} = c/r_0$ (in z-direction), normalized to the radius $r_0$ of the undeformed particle so that

$$r_0^3 = a \cdot b \cdot c \; ; \; 1 = \tilde{a} \cdot \tilde{b} \cdot \tilde{c},$$ assuming the particle consists of an incompressible material. Under the further assumption that the stress inside the deformed particle is uniform, the strain $\varepsilon$ is preferably computed from $\tilde{a}$, $\tilde{b}$ and $\tilde{c}$ in the third step according to

$$\text{Eq. 1: } \epsilon = (\tilde{a}^2 + \tilde{b}^2)/2I$$

with

$$I = \frac{2}{5} \frac{g_1'' + g_2''}{g_2'' g_3'' + g_3'' g_1'' + g_1'' g_2''}$$

and

$$g_1'' = \int_0^\infty \frac{\lambda}{(\tilde{b}^2 + \lambda)(\tilde{c}^2 + \lambda)\Delta'} d\lambda$$

$$g_2'' = \int_0^\infty \frac{\lambda}{(\tilde{a}^2 + \lambda)(\tilde{c}^2 + \lambda)\Delta'} d\lambda$$

$$g_3'' = \int_0^\infty \frac{\lambda}{(\tilde{a}^2 + \lambda)(\tilde{b}^2 + \lambda)\Delta'} d\lambda$$

with

$$\Delta' = \sqrt{(\tilde{a}^2 + \lambda)(\tilde{b}^2 + \lambda)(\tilde{c}^2 + \lambda)}$$

The shape integral I is preferably pre-computed for different ratios of $\tilde{a}$ and $\tilde{b}$ and then, e.g., taken from a look-up table. The measurement of the normalized semi-minor axis $\tilde{c}$ perpendicular to the imaging plane is not necessary as it can be computed according to $1 = \tilde{a} \cdot \tilde{b} \cdot \tilde{c}$.

In a preferred embodiment, the fluid shear stress $\sigma$ in the mid-plane (e.g. x-y-plane) of a channel with a length L and a square cross section of height H and width W = H depends only on the lateral position y and the total applied pressure $\Delta P$ according to the infinite-series expression

$$\text{Eq. 2: } \sigma(y) = \left| \frac{4H^2 \Delta P}{\pi^3 L} \sum_{n,odd}^\infty (-1)^{\frac{n-1}{2}} \frac{\pi}{n^2 H} \cos(\frac{n\pi z}{H}) \frac{\sinh\frac{n\pi y}{H}}{\cosh\frac{n\pi W}{2H}} \right|$$

with coordinates and dimensions of the channel as described further above. In particular, z is kept constant by choosing the imaging plane to correspond to the x-y-plane. For all practical purposes, it is sufficient to compute the infinite series for the first 100 terms. Eq. 2 assumes laminar uniaxial parallel flow and neglects entrance and exit effects, which is justified for the special channel design as used herein and which is one advantage of said specific channel design. Advantageously, for a given channel geometry and pressure gradient $\Delta P/L$, the shear stress profile $\sigma(y)$ does not depend on the viscosity of the fluid. Eq. 2 remains approximately valid also for non-Newtonian e.g. shear-thinning fluids. Eq. 2 further predicts that the shear stress is zero in the center of the channel and monotonically increases towards the channel wall. Because of the finite size of a particle, the acting shear stress is suitably calculated as the average of $\sigma(y-r_0)$ and $\sigma(y+r_0)$, where y is the center of mass of the particle, and $r_0$ is the equivalent radius of the particle $r_0^3 = a \cdot b \cdot c$. This assumes a linear shear stress across the particle, which is justified by the specific channel design.

In a suitable embodiment of the third step, a velocity profile, which is a function of the lateral position y, is determined. Above mentioned velocity profile measured by tracking the particles during the calibration step may be used. However, the fit function mentioned there only approximates the true velocity profile, which is sufficient to efficiently and robustly find the channel center. For subsequent computations that require higher precision, however, the velocity profile is preferably determined with higher accuracy by integrating the shear rate $\dot{\gamma}(y)$ according to

$$\text{Eq. 3: } v(y) = \int_{W/2}^{y} \dot{\gamma}(y') \, dy'$$

A velocity profile obtained that way is also called a "fitted velocity profile". The shear rate $\dot{\gamma}(y)$ is preferably computed from the shear stress $\sigma$ (see Eq. 2) divided by the viscosity $\eta$:

$$\text{Eq. 4: } \dot{\gamma}(y) = \frac{1}{\eta}\sigma$$

For shear thinning fluids such as e.g. alginate solutions, the viscosity $\eta$ is not constant but depends on the shear rate $\dot{\gamma}$. One can for example describe the shear thinning behaviour of the suspension fluid by a power-law Cross model, but other representations are also possible:

$$\text{Eq. 5: } \eta(\dot{\gamma}) = \frac{\eta_0}{1+(\tau\dot{\gamma})^{\delta}}$$

with zero-shear viscosity $\eta_0$, relaxation time $\tau$ and power-law shear-thinning exponent $\delta$. Thus, the device serves also as a viscometer or rheometer to measure the rheological properties of the suspension fluid. To measure the velocity profile, it is also possible to mix small beads into the fluid that serve as fiducial markers (instead of using the particles). Hence, it is a particular advantage of the method and device described here, that the viscosity is not needed as an input parameter, but instead is obtained by the method from more easily accessible parameters.

When Eq. 5 is inserted into Eq. 4, one obtains

$$\text{Eq. 6: } \dot{\gamma}(y) = \frac{1+\left(\tau\dot{\gamma}(y)\right)^{\delta}}{\eta_0}\sigma$$

This equation can be written as

$$\text{Eq. 7: } 0 = \frac{\sigma(y)}{\eta_0} - \dot{\gamma} + \frac{\sigma(y)}{\eta_0}\tau^{\delta}\cdot\dot{\gamma}^{\delta}$$

and is preferably numerically solved for $\dot{\gamma}(y)$, e.g. by root finding using the Newton-Raphson method.

Finally, to obtain the fitted velocity profile v(y) according to Eq. 3, the shear rate $\dot{\gamma}(y)$ is e.g. numerically integrated over the channel's lateral extension, e.g. its width W, preferably using five-point Gaussian quadrature and with the boundary condition $v_y = W/2 = 0$. The viscosity parameters ($\eta_0$, $\tau$, $\delta$) that best match the fitted velocity profile are preferably determined as follows: five Gaussian quadrature points y' between (0, W/2) are chosen and $\dot{\gamma}(y)$ is computed (e.g. numerically) at the quadrature point y' using Eq. 7. To ensure convergence, iterating is preferably started with a value of $\dot{\gamma}(y)$ that yields the maximum of the right-hand side of Eq. 7 plus a small number $\varepsilon$. The weighted sum of $\dot{\gamma}(y)$ at the Gaussian quadrature points y' is then the velocity at the lateral position y. This procedure is repeated for different values of ($\eta_0$, $\tau$, $\delta$) until a minimum of the squared differences between the measured and fitted velocity profile is found. In other words: the fitted velocity profile is obtained by integrating the shear rate over the lateral extension of the channel, and subsequently a number of viscosity parameters is iteratively determined by minimizing the difference of the fitted to the measured velocity profile. It has been observed that the rheological parameters (i.e. viscosity parameters $\eta0$, $\tau$, $\delta$) of the suspension medium obtained this way closely agree with cone-plate rheology measurements. Moreover, the velocity profile for different pressure values can be accurately predicted, demonstrating that Eq. 5 accurately describes the shear thinning behavior of the suspension medium.

As such, the third step as described above comprises a first and second sub-step, wherein in the first sub-step the shear stress is computed from the lateral position y and the pressure $\Delta P$ according to Eq. 2 and in the second sub-step the viscosity parameters ($\eta_0$, $\tau$, $\delta$), the viscosity $\eta$, the shear rate $\dot{\gamma}$ and the fitted velocity profile v(y) are derived using the measured velocity profile v(y).

The tank-treading parameter, preferably the frequency $\omega tt$, of the particles, is suitably measured from multiple images showing the same particle as it travels through the field-of-view of the imaging unit, similar to the measured velocity profile. Hence, this is preferably performed already as part of the second step. In a suitable embodiment, the tank-treading parameter is measured as follows: each particle is observed as it travels through the field-of-view, and image frames (i.e. par-tials of the images) are cut out with the particle at its center. The movement of characteristic small features is tracked (e.g. using optical flow estimated by the TV-L1 algorithm) and their speed and distance during their rotation around the particle's center is calculated. The speed versus the ellipse-corrected radius is fitted with a linear relationship to determine the average angular speed. The slope of this relationship is taken as the tank-treading frequency of the particle.

In cases where the tank-treading frequency cannot be measured (e.g. due to poor contrast or absence of particle-internal features that guide the optical flow algorithm), one can instead estimate the tank-treading frequency from an empirical relationship. For example, via

$$\text{Eq. 8: } \omega_{\text{tt}}(y) = \frac{\dot{\gamma}(y)}{2} \frac{1}{1+\left(0.113 \cdot \dot{\gamma}(y)\right)^{0.45}}$$

Eq. 8 is applicable at least for several cell types (fibroblasts, tumor cells, immune cells) suspended in an 1.5% to 2.5% alginate solution, but may need to be adapted in the case of other cell types, particles, or suspension media.

From these particle parameters and intermediate parameters, the viscoelastic properties of stiffness k and fluidity $\alpha$ of each particle are computed in a fourth step of the method, again preferably using the Roscoe theory.

The particles' storage modulus (G') and loss modulus (G") at its particular tank-treading frequency are calculated in the fourth step of the method, preferably from the shear stress (Eq. 2) and the particle's strain (Eq. 1) according to (i.e. using Roscoe-theory)

$$\text{Eq. 9: } \frac{5}{2} \frac{\sigma}{G'} \sin(2\beta) = \epsilon(a, b)$$

with $\beta$ being the alignment angle, i.e. the angle of the particle's semi-major axis with respect to the flow direction, and

$$\text{Eq. 10: } \cos(2\beta) = \left(\frac{a^2-b^2}{a^2+b^2}\right) \frac{1+\frac{2}{5}\frac{\eta-G''/\omega}{\eta}\frac{1}{K}\left(\frac{a^2+b^2}{2ab}\right)^2}{1+\frac{2}{5}\frac{\eta-G''/\omega}{\eta}\frac{1}{K}\left(\frac{a^2-b^2}{2ab}\right)^2}$$

with

$$K = \frac{1}{5g_3'} \frac{a^2 + b^2}{a^2 b^2}$$

and

$$g_3' = \int_0^\infty \frac{1}{(a^2 + \lambda)(b^2 + \lambda)\Delta'} d\lambda$$

with $\Delta'$ as already mentioned above.

G' and G" and, hence, the complex modulus $\tilde{G} = G' + \iota G''$ of the particle are dependent on the tank-treading parameter. Assuming power-law behavior, without limiting the generality of the approach, the complex modulus is expressed as

$$\text{Eq. 11: } \tilde{G} = k \left(i \frac{\omega_{\text{tt}}}{\omega_0}\right)^\alpha \Gamma(1 - \alpha)$$

where $\omega$tt is the tank-treading frequency of the particle, $\Gamma$ is the gamma-function, k is the elastic modulus (particle stiffness) referenced to a frequency $\omega_0$ (a preferred choice is 1 rad/s), $\alpha$ is the power-law exponent that characterizes the fluidity of the particle (zero indicating purely Hookean elastic behavior, unity indicating Newtonian viscous behavior), and

$$\iota = \sqrt{-1}.$$

Finally, in a suitable embodiment of the fourth step of the method, particle stiffness k and particle fluidity $\alpha$ of each particle are obtained from G' and G" determined at the tank-treading frequency $\omega$tt by rearranging Eq. 11:

$$\text{Eq. 12: } \alpha = \frac{2}{\pi}\arctan\left(\frac{G''}{G'}\right)$$

$$\text{Eq. 13: } k = \frac{G'}{\omega_{tt}^{\alpha}\Gamma(1-\alpha)\cos\left(\frac{\pi}{2}\alpha\right)}$$

A Gaussian kernel density estimation is preferably used to compute the mode of the 2-D distribution for stiffness k and fluidity $\alpha$, which corresponds to the "most representative" particle with the highest joint probability for stiffness k and fluidity $\alpha$. But other suitable methods for averaging the stiffness k and fluidity $\alpha$ of many particles are also possible, such as the geometric mean or the median.

As such, also the fourth step as described above comprises a first and second sub-step, wherein in the first sub-step the storage and loss moduli are computed from Eqs. 9 and 10 using particle shape, tank-treading frequency and viscosity and in the second sub-step the stiffness and fluidity are computed from the storage and loss moduli.

In a suitable embodiment, the analysis unit is configured to perform the calibration, second, third and fourth step. In the alternative, these steps may be performed by two or more sperate units. The imaging unit, then, performs the first step and sends the recorded images to the analysis unit.

The viscosity parameters ($\eta_0$, $\tau$, $\delta$) and the pressure parameter $\Delta P$ are considered to be global properties or global parameters, while all other parameters (x, y, z, a, b, c, $\beta$, $\omega_{tt}$, G', G", k, $\alpha$, v(y), $\eta$(y), $\sigma$(y), $\dot{\gamma}$(y)) are considered to be particle properties or particle parameters. Strictly speaking, the viscosity $\eta$, shear stress $\sigma$ and shear rate $\dot{\gamma}$ are parameters of the suspension medium and not of the particle per se, but given that these parameters are each expressed as a function of the position inside the channel, the particular parameter at a particle's position may also be considered a particle parameter. All other particle parameters, though, are direct parameters of a particle. The particle parameters directly obtained from the imaging analysis (x, y, z, a, b, c, $\beta$, v(y), $\omega_{tt}$) are also called "basic parameters", while the other particle parameters ($\eta$, $\sigma$, $\dot{\gamma}$, G', G", k, $\alpha$) are also called "derived parameters".

In the following, a preferred embodiment of the method as described above is summarized:
First, a multitude of images of particles fed through the channel are recorded with the imaging unit. Second, the images are analyzed with the analysis unit, e.g. offline with an evaluation pipeline. The analysis unit loads the images and finds and segments particles at the focal plane of the imaging unit, e.g. by using a neural network. From the segmented particle shape, morphological properties (i.e. shape, in particular: x- and y-position, semi-major axis a and semi-minor axes b and c, alignment angle $\beta$, solidity and/or circumference) are extracted e.g. using the *re-gionprops* method of the *skimage* library. Poorly or erroneously segmented particles that deviate from an elliptical shape are filtered out e.g. based on circumference and solidity criteria. From a measurement with 10,000 image frames, typically 5,000 to 10,000 particles are identified for subsequent analysis.

Next, particles are identified that are detected across multiple subsequent frames, preferably based on shape and position. Then, the velocity is computed, and a particle image velocimetry algorithm is applied to extract the tank-treading parameter. Eq. 3 is then fitted to the velocity versus y-position relationship of all particles, yielding the channel center $y_c$ and the maximum flow speed $v_{max}$.

The shear stress acting at the center position of each particle is computed using Eq. 2, and the shear rate at the center position of each particle is computed using a set of equations as described above. The latter procedure also yields the parameters that describe the viscosity and shear-thinning rheology of the suspension medium.

The particle strain is computed from the semi-major axis a and semi-minor axis b using Eq. 1. Subsequently, G' and G" of each particle at its tank-treading frequency are computed using Eqs. 9 and 10.

To compare the viscoelastic properties of particles that have experienced different tank-treading frequencies, G' and G" are preferably scaled to a frequency of 1 rad/s using Eqs. 12 and 13, yielding the stiffness and fluidity f individual particles. The average stiffness and fluidity of the particle population is determined e.g. from the maximum of the two-dimensional Gaussian kernel density computed using the *scipy.stats.gaussian_kde* method of the *scipy* library.

As a sidenote, the method presented here can be verified to provide accurate quantitative measurements of viscoelastic properties by using particle lines and calibrated soft polyacrylamide beads. Measurement results are not or only marginally influenced by experimental details such as the viscosity of the suspension medium, the applied pressure, or the time point after suspending the particles. It can be demonstrated that the particles' viscoelastic properties measured with the method and device presented here conform to soft glassy power-law rheology that has been reported for a wide range of cells measured with a range of different methods. The method and device described here can also be used for dose-response measurements, e.g. of drugs that induce actin cytoskeleton disassembly, and these responses can be shown to be modulated by the cell cycle and the intermediate filament network of the cells. However, this is not of primary importance here.

The invention is described in detail below and with reference to the following figures, showing - among other things - preferred embodiments of the invention:

Fig. 1    a device,

Fig. 2    the shear stress as a function of distance from the channel center for various pressures,

Fig. 3    images of particles at different distances from the channel center and at various pressures,

Fig. 4    a channel of the device of Fig. 1,

Fig. 5    the tank-treading frequency as a function of the shear rate for various pressures,

Fig. 6    a particle and its shape as well as alignment angle,

Fig. 7    aspects of a method,

Fig. 8    a method,

Fig. 9    the viscosity as a function of the position in the channel for various pressures,

Fig. 10   the shear rate as a function of the position in the channel for various pressures,

Fig. 11   the velocity as a function of the position in the channel for various pressures,

Fig. 12   fluidity versus stiffness for a multitude of particles.

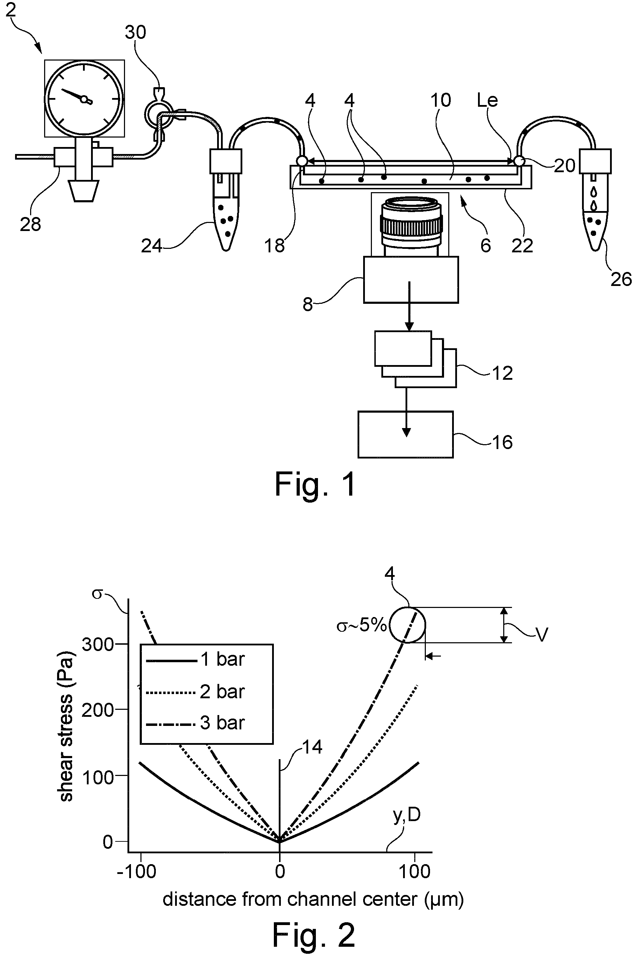

Fig. 1 shows an exemplary embodiment of a device 2 configured for use in a method for determining a number of viscoelastic properties, here stiffness k and fluidity $\alpha$, of a number of particles 4 of a suspension. The device 2 comprises a channel 6 and an imaging unit 8. The channel 6 is configured for feeding through of the suspension, which comprises a suspension medium 10, in which the particles 4 are suspended. The channel 6 extends in a longitudinal direction L and has a lateral extension E perpendicular to said longitudinal direction L. The imaging unit 8 is configured to record images 12 from the particles 4 in the channel 6 and in an imaging plane.

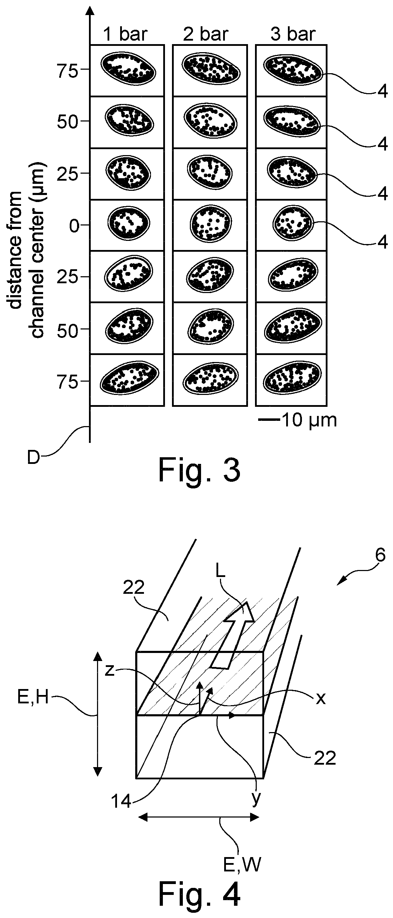

The channel 6 is configured such that the particles 4 are exposed to a shear stress $\sigma$ deforming a shape of a respective particle 4 depending on its distance D to a channel center 14. Examples of a suitable shear stress $\sigma$ as a function of the distance D (i.e. shear stress profiles) for three different pressures $\Delta P$ over the channel 6 are shown in Fig. 2. Examples for deformed particle shapes as a function of the distance D are shown in Fig. 3 for the three shear stress profiles from Fig. 2. and for seven distances D each. The channel 6 is further configured such that the shear stress $\sigma$ across a respective particle 4 varies by at most a maximum variation V, for enabling a linear approximation of the shear stress $\sigma$ when deriving the viscoelastic properties. In other words: the channel 6 is designed such that certain assumptions and/or simplifications can be made when computing the viscoelastic properties. By the described limitation via the maximum variation V, it is justified to assume that the shear stress $\sigma$ across a respective particle 4 is linear or even constant. This is illustrated in Fig. 2, which shows a particle 4 to scale with respect to the axis for the distance D and along one of the shear stress profiles, thereby illustrating, that the shear stress $\sigma$ can be considered linear across the entire particle 4. The maximum variation V is measured across a given particle 4 in a lateral direction y, i.e. perpendicular to the longitudinal direction L. In the example shown here, the maximum variation V is at most 10% (e.g. 10% of the shear stress $\sigma$ at a center of the particle 4 or 10% of the average shear stress $\sigma$ across the particle 4, e.g. computed as the difference between the two values of the shear stress $\sigma$ on opposite sides of the particle 4). This is illustrated in Fig. 2 by the indicated variation of 5% across the radius, which corresponds to a maximum variation V of 10% across the entire particle 4.

The method, then, is used for determining a number of viscoelastic properties, here stiffness k and fluidity $\alpha$, of the particles 4. The suspension is fed through the channel 6. Images 12 from the particles 4 in the channel 6 are recorded with the imaging unit 8. As part of the method, a number of particle properties are determined by analyzing the images 12 and deriving the viscoelastic properties of the particles 4 from said particle properties. Possible embodiments for the corresponding computations are discussed below and have already been presented in detail in the description above. Analyzing the images 12 is here performed by an analysis unit 16, e.g. a computer, to which the images 12 are send via a suitable communications connection. The images 12 are either sent directly to the analysis unit 16 for real-time analysis or, alternatively, the images 12 are stored in a storage of the device or analysis unit 16 for later analysis.

In the present case, the viscoelastic properties are entirely derived from basic parameters easily accessible via an analysis of the images 12 of the particles 4 on the one hand and on the other hand global parameter, here dimensions of and pressure $\Delta P$ in the device 2, which are equally easily accessible parameters.

In the general description above, it has already been illustrated how to compute the viscoelastic properties of the measured particles 4 based on the Roscoe theory. Although this Roscoe theory is used in the examples shown here, the invention is not limited to this theory as other theories may also be applied. In any case, the device shown here specifically allows certain assumptions and thereby enables using the simple and efficient Roscoe theory, for ultimately computing the viscoelastic properties.

An example of the channel 6 and its geometry is shown in Fig. 4. The channel 6 extends in the longitudinal direction L, which is also a direction of flow of the particles 4 during operation. When fed through the channel 6, each particle 4 has a velocity v in the direction of flow. The channel 6 has an input port 18, through which the suspension is fed into the channel 6, and an output port 20, through which the suspension exits the channel 6. In the example shown in Figs. 1 and 4, the channel 6 only has a single input port 18. The channel 6 comprises a number of channel walls 22, also extending in the longitudinal direction L. The channel 6 also comprises a channel center 14, which extends in the longitudinal direction L and is here equidistantly spaced from any channel walls 22. In the present case, the channel 6 is also a microchannel. Furthermore, the channel 6 shown here is long, i.e. has a length Le in the longitudinal direction L of several centimeters, e.g. between more than 1 cm, preferably more than 2 cm to 10 cm. The channel 6 shown here is also straight.

Further, the exemplary channel 6 shown here has a large cross section, i.e. a large lateral extension E. Specifically, the lateral extension E shown here is at least 5 times an average diameter of the particles 4 and larger than 75 $\mu$m, e.g. 200 $\mu$m. The cross section is also constant along the entire length Le of the channel 5. Furthermore, the channel 6 shown here is at least 5 times as long as its lateral extension E. The channel 6 shown here further has a square cross section such that the channel 6 has two lateral extension E, namely a height H and a width W, e.g. both of which are e.g. 200 $\mu$m. The large channel 6 shown here leads to the shear stress $\sigma$ across a respective particle 4 varying by at most the maximum variation V as indicated above, for enabling a linear approximation of the shear stress $\sigma$ when deriving the viscoelastic properties. The dimensions of the channel 6, i.e. its length Le and lateral extension E (width W and height H) and cross section, are summarized with the expression "channel geometry". Aside from the embodiment shown here, other embodiments of the channel 6 are possible and suitable.

Without loss of generality, the longitudinal direction L is also called x-direction x and the channel 6 laterally extends in a y-direction y and a z-direction z, such that the width W and height H are measured in said y- and z-direction y, z respectively. Any position in the channel is then described by coordinates x, y and z, wherein it is assumed here that x and y are 0 at the channel center 14. The x and y coordinates for any given particle 4 hence define its lateral distance D or radial distance from the center axis, said distance D also being denoted as "lateral position" or "radial position". Also, it is assumed here that the imaging plane for image acquisition during the method is defined by the x- and y-directions x, y, such that the lateral position equals the y coordinate and any function expressed as function of the lateral position may be denoted as a function of the y coordinate.

The particles 4 in the example shown here have an average diameter between 5 $\mu$m and 20 $\mu$m. The particles shown here are cells. The suspension medium 10 shown here is a linear and shear-thinning fluid.

The particles 4 and more general the entire suspension are fed, here pumped, through the channel 6. The device 2 shown here is configured such that a laminar flow of the suspension along the channel 6 is achieved during operation. In the embodiment shown in Fig. 1, the suspension is fed through the channel 6 with a pressure $\Delta$P of 0.5 bar to 6 bar, which is considered a high pressure, so that the particles 4 are exposed to a fluid shear stress $\sigma$ that is sufficiently large to induce measurable particle deformations, as illustrated in Fig. 3. Said pressure $\Delta$P is a pressure difference between the input port 18 and the output port 20. The terms "pressure" and "pressure difference" are used interchangeably to refer to the pressure $\Delta$P across the channel 6, i.e. the pressure difference between input port 18 and output port 20. The shear stress $\sigma$, then, is here larger than 50 Pa, at least near or at the channel walls 22.

In the exemplary embodiment shown in Fig. 1, the device 2 comprises a particle reservoir 24, from which the suspension is fed to the channel 6 and a corresponding waste reservoir 26, to which the suspension is fed after exiting the channel 6. In the present embodiment, the suspension is fed using compressed air, which is fed into the particle reservoir 24, here via a pressure regulator 28 and a three-way-valve 30 downstream of said pressure regulator 28 and upstream of the particle reservoir 24. The pressure regulator 28 is also used to set the pressure $\Delta$P or pressure gradient $\Delta$P/Le to the desired value. Along the channel 6, the imaging unit 8 is positioned with a viewing direction perpendicular to the channel 6 and its longitudinal direction L, such that the imaging plane of the imaging unit 8 lies within the channel 6 and extends along the longitudinal direction L.

The velocity v (i.e. flow rate or speed) of the particles 4 is in the example shown here limited by suspending the particles 4 in a suspension medium 10 with a high viscosity $\eta$, which in the present case is more than 0.5 Pas, so that the particle deformations and their speed can be measured with a standard CCD or CMOS camera (e.g. at 500 fps) as part of the imaging unit 8. As such, the viscosity $\eta$ is chosen with the imaging unit's 8 frame rate as a boundary condition. In the example shown here, the viscosity $\eta$ of the suspension medium 10 is chosen such that the velocity v of the particles 4 is smaller than 20 mm/s, so that the particle shape can be captured without noticeable motion blur, e.g. at an exposure time of 30 $\mu$s using a standard high frame rate, e.g. 500 Hz, CCD- or CMOS-camera.

In the embodiment shown here, the method also comprises determining rheological properties of the suspension medium 10. Hence, that the device 2 is in addition a capillary rheometer or viscosimeter and the method is in addition a method for determining rheological parameters of the suspension medium 10.

The device 2 and method presented here take advantage of the following physical principles and insights by implementing corresponding design choices:

First, the shear stress profile (i.e. the shear stress $\sigma$ as a function of the lateral position y in the channel 6 or of the distance D from the channel center 14) inside the long channel 6 depends only a) on the total pressure difference $\Delta P$ across the channel 6, which is precisely controlled by the pressure regulator 28, and b) the channel geometry, which is fixed. Importantly, the channel 6 is configured such, that the shear stress profile does not depend on the viscosity $\eta$ of the suspension medium 10 and smoothly increases from zero at the channel center 14 to a maximum value at the channel wall 22 (as shown in Fig. 2), so that, accordingly, the particles 4 are circular near the channel center 14 and become increasingly elongated, here elliptical, near the channel wall 22 (as shown in Fig. 3).

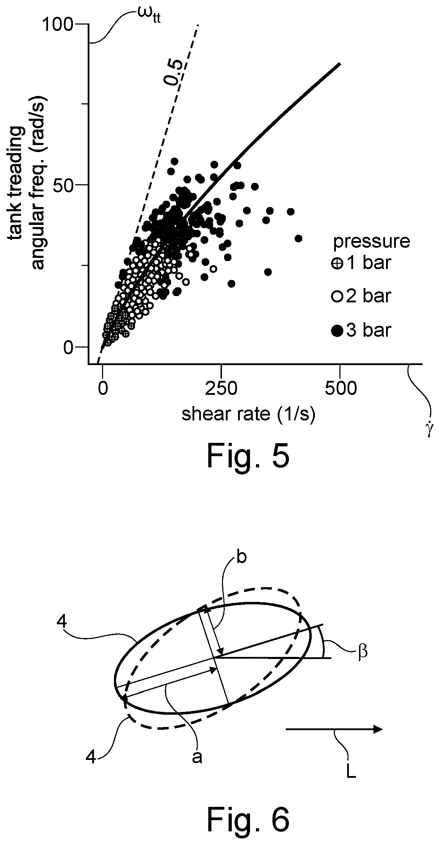

Second, depending on the velocity profile (i.e. the velocity v as a function of the lateral position y in the channel 6 or of the distance D from the channel center 14) inside the channel 6, the particles 4 rotate in a tank-treading manner. In other words: the particles 4 perform an internal rotation. This tank-treading motion is characterized by tank-treading parameter, in particular a rotational speed or frequency $\omega_{tt}$ which increase with increasing shear rate $\dot{\gamma}$ near the channel wall 22. The frequency $\omega_{tt}$ of this tank-treading motion is well-defined in the range between 0.1 Hz and several tens of Hz, i.e. up to 100 Hz, or even up to 1000 Hz, where viscous (dissipative) particle properties are measurable but do not yet dominate the mechanical response. This is illustrated in Fig. 5, showing the tank-treading frequency $\omega_{tt}$ of a multitude of particles 4 as a function of the shear rate $\dot{\gamma}$ for the three different values of the pressure $\Delta P$ as in Figs. 2 and 3. The frequency $\omega_{tt}$ tends to increase with increasing shear rate $\dot{\gamma}$ near the channel wall 22. In the present case, the particles 4 in the channel 6 are exposed to a locally well-defined shear rate $\dot{\gamma}$ that induces a measurable or predictable tank-treading particle rotation, here in the range of, but not limited to, 0.1 Hz and 100 Hz. In addition, the tank-treading affects how particles 4 align in the flow direction. Tank-treading in combination with the particle's viscous properties leads to energy dissipation, which limits the increase of particle strain $\varepsilon$ at higher stresses $\sigma$ near the channel wall 22.

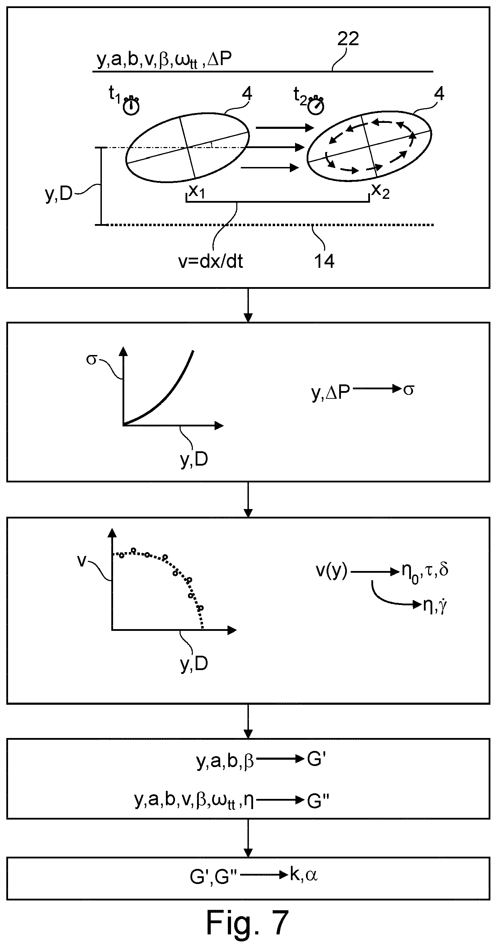

For the quantification of particle viscoelastic properties, the theoretical framework developed by Roscoe is used. This theory allows for computing the stiffness k (shear modulus) and fluidity $\alpha$ of each particle 4 from five easily measurable parameters. Hence, in the embodiment shown here, the stiffness k and fluidity $\alpha$ of the particles 4 are computed from the five parameters as described in the following and as further illustrated in Fig. 7, showing aspects of the method: As a first parameter, the shear stress $\sigma$ acting on each particle 4 is determined. In the embodiment presented here with a square channel 6, this is computed based on Eq. 2 mentioned above. Furthermore, the shear stress $\sigma$ for a respective particle 4 is here computed solely from the pressure $\Delta P$ over the channel 6, the channel geometry and the lateral position y of the respective particle 4. As a second parameter, the particle strain $\varepsilon$, see Eq. 1 above, is determined from a respective particle's 4 dimensions in the imaging plane, said particle dimensions being obtained by analyzing the images 12. As a third parameter, the alignment angle $\beta$ (or just "alignment") of the deformed particle 4 with respect to the flow direction is determined. The alignment angle $\beta$ is illustrated in Fig. 6 and is also clearly recognizable in Fig. 3. This alignment angle $\beta$ depends on the ratio between particle viscosity and the viscosity $\eta$ of the suspension medium 10. As a fourth parameter, the viscosity $\eta$ as a function of the lateral position y of the shear-thinning suspension medium 10 is computed, see Eq. 5 above. The viscoelastic properties are determined at a respective tank-treading frequency $\omega_{tt}$ of a respective particle 4 and are scaled to a reference for comparison of different particles 4 that have experienced different the tank-treading frequencies $\omega_{tt}$. Since particle stiffness k and particle fluidity $\alpha$ are dependent on the tank-treading frequency $\omega_{tt}$, the tank-treading frequency $\omega_{tt}$ of each particle 4 is determined as a fifth parameter, e.g. from image analysis or from an empirical relationship as e.g. described in Eq. 8 above.

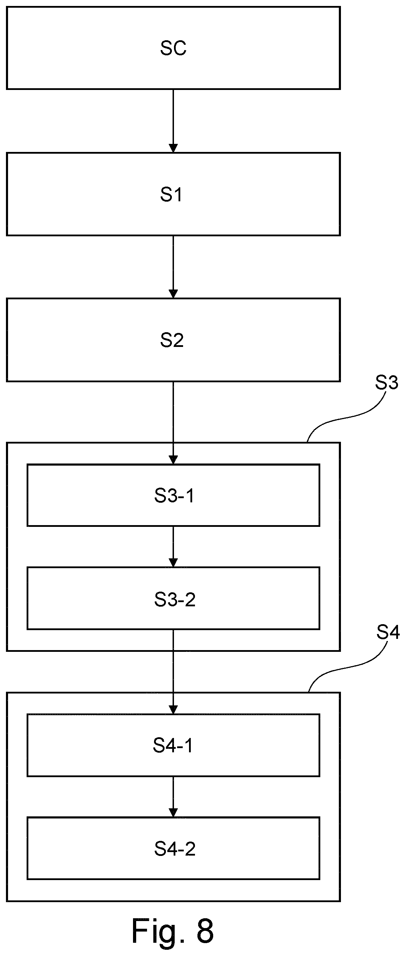

Fig. 8, then shows a flow chart of an exemplary embodiment of the method described here, which comprises the following calibration step and first to fourth step.

Prior to any recording of images 12 and in the calibration step SC, the imaging unit 8, e.g. a microscope, is precisely focused to the channel center 14.

In the first step S1 the imaging unit 8 is used to record a multitude of images 12 from a multitude of particles 4 in the channel 6 as they flow through said channel 6 at a constant pressure $\Delta P$. Depending on the exact setup of the device 2 and the applied pressure $\Delta P$, this typically takes 20 s to 100 s.

The first step S1 is also called "image acquisition". In said first step S1, images 12 of the particles 4 are recorded perpendicular to the longitudinal direction L and, hence, in a plane along the longitudinal direction L, e.g. the x-y-plane. Typically, 10,000 images 12 per measurement are recorded with. The velocity v is determined by recording in the first step S1 each particle in4 at least two consecutive images 12.

In the second step S2, particle parameters, namely the position (in particular in the imaging plane, i.e. x- and y-position), the elliptical shape (i.e. parameters quantifying said shape), the alignment angle $\beta$, the tank-treading frequency $\omega_{tt}$ and the velocity v of each particle 4 in each image 12, are determined.

Also in the second step S2 the channel center 14 is identified from a velocity profile. For this, the velocity v is determined by the tracking of particles 4 over subsequent images 12 in the first step S2 and, then, in the second step S2 dividing the distance they have moved in the longitudinal direction L (i.e. x-direction) by the time difference between images 12. A velocity profile obtained that way is also called a "measured velocity profile".

The second step S2 is also called "image analysis" and comprises analyzing the images 12. Particle parameters determined in the second step S2 in the present example include the semi-major axis a and semi-minor axis b both parallel to the imaging plane, i.e. the particle shape (see Fig. 6). Basically, an outline of a respective particle 4 is detected, to which an ellipse is fitted, hereby determining x- and y-positions of the ellipse center, the ellipse's semi-major axis a and semi-minor axis b, and the alignment angle $\beta$ of the semi-major axis a with respect to the flow direction (i.e. the x-direction).

The tank-treading parameter, here the frequency $\omega_{tt}$, of the particles 4 is measured from multiple images 12 showing the same particle 4 as it travels through the field-of-view of the imaging unit 8, similar to the measured velocity profile. Hence, this is here performed already as part of the second step S2.

The determination of the parameters y, a, b, $\beta$ v, $\omega_{tt}$ described in connection with the second step in combination with the pressure $\Delta P$ is also shown in the first box of Fig. 7 as a first aspect of the method.

In the third step S3, derived parameters, namely the shear stress $\sigma$, shear strain $\varepsilon$, the viscosity $\eta$ of the suspension medium 10, and a more accurate velocity profile, are computed by using the particle parameters determined in the second step S2 by using the Roscoe theory.

Suspended particles 4 under zero shear stress $\sigma$ have an approximately circular shape. When exposed to constant shear stress $\sigma$, as ensured here by the specific channel design, the particle 4 deforms to an elliptical shape (see Fig. 3). Assuming the particle 4 consists of an incompressible material and the stress inside the deformed particle 4 is uniform, the strain $\varepsilon$ is computed in the third step S3 as described in Eq. 1 above, i.e. solely from the particle dimensions, i.e. a respective particles extension in the imaging plane (x- and y-direction).

The shear stress $\sigma$ is computed as described in Eq. 2 above, which assumes laminar uniaxial parallel flow and neglects entrance and exit effects, which is justified for the special channel design as used herein.

In the embodiment presented here, another velocity profile is determined in the third step S3. Although the above mentioned measured velocity profile measured by tracking the particles 4 during the calibration step SC may be used, the velocity profile in the embodiment shown here is preferably determined again with higher accuracy as a so called "fitted velocity profile" by integrating the shear rate $\dot{\gamma}$ as described above in connection with Eqs. 3 to 7. This approach also yields the viscosity $\eta$ of the suspension medium 10, including viscosity parameters $\eta_0$, $\tau$, $\delta$ as used in Eq. 5. In short: the fitted velocity profile is obtained by integrating the shear rate $\dot{\gamma}$ over the lateral extension E of the channel 6 and iteratively determining the viscosity parameters by minimizing the difference to the measured velocity profile.

As such, the third step S3 comprises a first sub-step S3-1 and second sub-step S3-2, wherein in the first sub-step S3-1 the shear stress $\sigma$ is computed from the lateral position y and the pressure $\Delta P$ according to Eq. 2 (see second box of Fig. 7) and in the second sub-step S3-3 the viscosity parameters $\eta_0$, $\tau$, $\delta$ the viscosity $\eta$, the shear rate $\dot{\gamma}$ and the fitted velocity profile v(y) are derived using the measured velocity profile v(y) (see third box in Fig. 7).

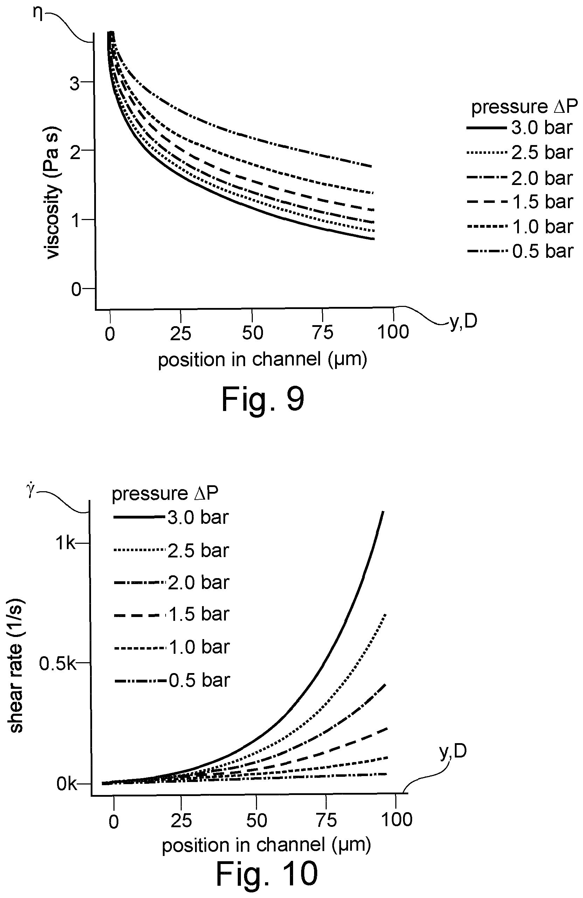

Examples for the shear stress $\sigma$ are shown in Fig. 2. Examples of the viscosity $\eta$, the shear rate $\dot{\gamma}$ and the fitted velocity profile as a function of the lateral position y/distance D and for various pressures $\Delta P$ are, then, shown in Figs. 9, 10 and 11, respectively.

From these particle parameters and intermediate parameters, the viscoelastic properties of stiffness k and fluidity $\alpha$ of each particle 4 are computed in the fourth step S4.

The particles' 4 storage modulus G' and loss modulus G" are calculated in the fourth step S4 from the shear stress $\sigma$ and the particle's strain $\varepsilon$ according Eqs. 9 and 10 as described above.

Finally, in the fourth step S4, particle stiffness k and particle fluidity $\alpha$ of each particle 4 are obtained from the moduli G' and G" determined at the tank-treading frequency $\omega_{tt}$ by Eqs. 12 and 13 as described above.

As such, also the fourth step S4 comprises a first sub-step S4-1 and second sub-step S4-2, wherein in the first sub-step S4-1 the storage and loss moduli G', G" are computed from Eqs. 9 and 10 using particle shape (a, b), tank-treading frequency $\omega_{tt}$ and viscosity $\eta$ (see fourth box in Fig. 7) and in the second sub-step S4-2 the stiffness k and fluidity $\alpha$ are computed from the storage and loss moduli G', G" (see fifth box in Fig. 7).

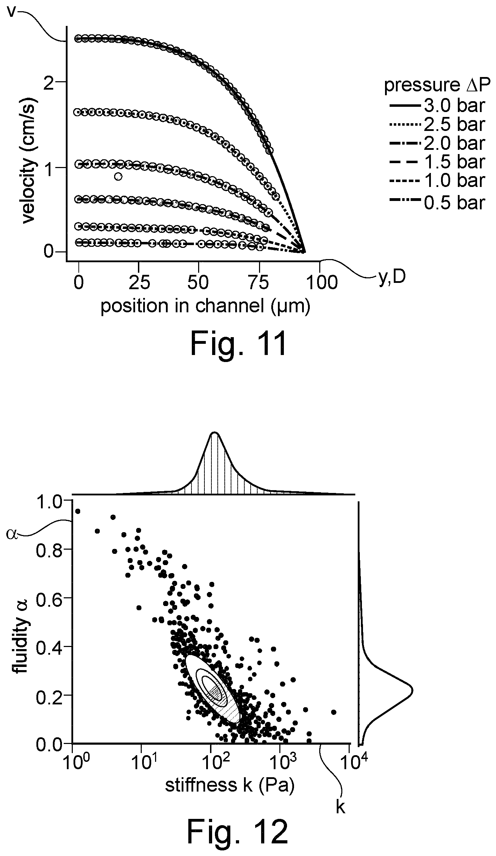

Examples for the stiffness k and fluidity $\alpha$ are shown in Fig. 12, showing the two parameters plotted against each other for each one of a multitude of particles 4. The top and right-hand graphs show the distribution of the respective values.

The features and embodiments described in this application and in connection with the figures are not restricted to the specific combinations and values as described and shown therein. Rather, further advantageous embodiments of the invention result from omitting some features and/or from different combinations of the mentioned features and/or by selecting different values, in particular as described above.

List of reference numerals

2       device
4       particle
6       channel
8       imaging unit
10     suspension medium
12     image
14     channel center
16     analysis unit
18     input port
20     output port
22     channel wall
24     particle reservoir
26     waste reservoir
28     pressure regulator
30     three-way valve

E       lateral extension
G'      storage modulus
G"     loss modulus
H       height
k       stiffness
L       longitudinal direction (=direction of flow, x-direction)
Le     length
$\Delta P$    pressure
SC     calibration step
S1     first step, image acquisition
S2     second step, image analysis
S3     third step
S3-1   first sub-step (of the third step)
S3-2   second sub-step (of the third step)
S4     fourth step

S4-1   first sub-step (of the fourth step)
S4-2   second sub-step (of the fourth step)
v       velocity
V       maximum variation
W      width
x       x-direction
y       y-direction, lateral direction
z       z-direction

$\alpha$     fluidity
$\beta$     alignment (angle)
$\dot{\gamma}$     share rate
$\varepsilon$     strain
$\eta$     viscosity
$\sigma$     shear stress
$\omega_{tt}$   tank-treading frequency $\gamma$

**Claims**

1.  Method for determining a number of viscoelastic properties, in particular stiffness (k) and fluidity ($\alpha$), of a number of particles (4) of a suspension,

     - wherein the suspension comprises a suspension medium (10), in which the particles (4) are suspended,
     - wherein said suspension is fed through a channel (6), said channel (6) extending in a longitudinal direction (L) and having a lateral extension (E) perpendicular to said longitudinal direction (L),
     - wherein the lateral extension (E) is at least 5 times an average diameter of the particles (4),

- wherein images (12) from the particles (4) in the channel (6) are recorded with an imaging unit (8) and in an imaging plane as the particles (4) flow through the channel (6) at a constant pressure difference ($\Delta P$) between an input port and an output port of the channel (6),

- wherein a number of particle properties are determined by analyzing the images (12) and wherein the viscoelastic properties of the particles (4) are derived from said particle properties,

- wherein the particles (4) inside the channel (6) are exposed to a shear stress ($\sigma$) deforming a shape of a respective particle (4) depending on its distance (D) to a channel center (14),

- wherein the channel (6) is configured such that the shear stress ($\sigma$) across a respective particle (4) varies by at most a maximum variation (V), for enabling a constant approximation of the shear stress ($\sigma$) when deriving the viscoelastic properties,

**characterized in that**

- the suspension medium (10) is non-Newtonian,

- the shear stress ($\sigma$) for a respective particle (4) is computed solely from the pressure ($\Delta P$) over the channel (6), a channel geometry and a lateral position (x, y) of the respective particle (4), which are obtained by analyzing the images (12).

2. Method according to claim 1,
   wherein the channel (6) in the longitudinal direction (L) has a length (Le) of at least 1 cm to 10 cm.

3. Method according to claim 1 or 2,
   wherein the channel (6) has a cross section, which is constant along the entire length (Le) of the channel (6).

4. Method according to any one of claims 1 to 3,
   wherein the lateral extension (E) is more than 75 $\mu$m.

5. Method according to any one of claims 1 to 4,
   wherein the maximum variation (V) is at most 10%.

6. Method according to any one of claims 1 to 5,
   wherein the suspension is fed through the channel (6)

   - with a pressure ($\Delta P$) of 0.5 bar to 6 bar and/or
   - with a pressure gradient in the range of 0.05 bar/cm to 5 bar/cm.

7. Method according to any one of claims 1 to 6,
   wherein the particles (4) in the channel (6) are exposed to a shear rate ($\dot{\gamma}$) that induces a tank-treading particle rotation with a tank-treading frequency ($\omega_{tt}$) in the range of 0.1 Hz and 1000 Hz, more preferably 1 Hz to 20 Hz.

8. Method according to any one of claims 1 to 7,
   wherein a particle strain ($\varepsilon$) is determined from a respective particle's shape, in particular from its dimensions (a, b) in the imaging plane.

9. Method according to any one of claims 1 to 8,

   wherein a measured velocity profile is determined by tracking particles (4) over subsequent images (12) and dividing a distance they have moved in the longitudinal direction (L) by a time difference between said images (12) and

   wherein a fitted velocity profile is obtained by integrating a shear rate ($\dot{\gamma}$) over the lateral extension (E) of the channel (6) and subsequently a number of viscosity parameters is iteratively determined by minimizing the difference of the fitted to the measured velocity profile.

10. Method according to any one of claims 1 to 9,
    wherein the particles are cells, in particular living cells.

11. Method according to any one of claims 1 to 10,
    wherein the viscosity ($\eta$) of the suspension medium (10) is determined based on analyzing the images (12).

12. Method according to any one of claims 1 to 11,

wherein the viscoelastic properties are determined at a respective value of a tank-treading parameter of a respective particle (4) and are scaled to a reference for comparison of different particles (4) that have experienced different values of the tank-treading parameter.

**Patentansprüche**

1. Verfahren zur Bestimmung mehrerer viskoelastischer Eigenschaften, insbesondere Steifigkeit (k) und Fluidität ($\alpha$), mehrerer Partikel (4) einer Suspension,

   - wobei die Suspension ein Suspensionsmedium (10) umfasst, in dem die Partikel (4) suspendiert sind,
   - wobei die Suspension durch einen Kanal (6) geleitet wird, wobei der Kanal (6) in einer Längsrichtung (L) verläuft und eine seitliche Ausdehnung (E) senkrecht zu der Längsrichtung (L) aufweist,
   - wobei die seitliche Ausdehnung (E) wenigstens 5-mal einem mittleren Durchmesser der Partikel (4) beträgt,
   - wobei Bilder (12) von den Partikeln (4) in dem Kanal (6) mit einer Bildgebungseinheit (8) und in einer Bildebene aufgezeichnet werden, während die Partikel (4) bei einer konstanten Druckdifferenz ($\Delta$P) zwischen einer Eingangsöffnung und einer Ausgangsöffnung des Kanals (6) durch den Kanal (6) fließen,
   - wobei mehrere Partikeleigenschaften durch Analysieren der Bilder (12) bestimmt werden und wobei die viskoelastischen Eigenschaften der Partikel (4) aus den Partikeleigenschaften abgeleitet werden,
   - wobei die Partikel (4) in dem Kanal (6) einer Scherspannung ($\sigma$) ausgesetzt sind, die eine Form eines entsprechenden Partikels (4) abhängig von seinem Abstand (D) zu einem Kanalzentrum (14) verformt,
   - wobei der Kanal (6) so gestaltet ist, dass die Scherspannung ($\sigma$) über ein jeweiliges Partikel (4) höchstens um eine maximale Variation (V) variiert, um eine konstante Näherung der Scherspannung ($\sigma$) zu ermöglichen, wenn die viskoelastischen Eigenschaften abgeleitet werden,
   **dadurch gekennzeichnet, dass**
   - das Suspensionsmedium (10) nicht-newtonsch ist,
   - die Scherspannung ($\sigma$) für ein entsprechendes Partikel (4) allein aus dem Druck ($\Delta$P) über den Kanal (6), einer Kanalgeometrie und einer seitlichen Position (x, y) des entsprechenden Partikels (4), die durch Analyse der Bilder (12) erhalten werden, berechnet wird.

2. Verfahren nach Anspruch 1,
   wobei der Kanal (6) in der Längsrichtung (L) eine Länge (Le) von wenigstens 1 cm bis 10 cm aufweist.

3. Verfahren nach Anspruch 1 oder 2,
   wobei der Kanal (6) einen Querschnitt aufweist, der entlang der gesamten Länge (Le) des Kanals (6) konstant ist.

4. Verfahren nach einem der Ansprüche 1 bis 3,
   wobei die seitliche Ausdehnung (E) mehr als 75 $\mu$m beträgt.

5. Verfahren nach einem der Ansprüche 1 bis 4,
   wobei die maximale Variation (V) höchstens 10 % beträgt.

6. Verfahren nach einem der Ansprüche 1 bis 5,
   wobei die Suspension durch den Kanal (6) geleitet wird

   - mit einem Druck ($\Delta$P) von 0,5 bar bis 6 bar und/oder
   - mit einem Druckgradienten in dem Bereich von 0,05 bar/cm bis 5 bar/cm.

7. Verfahren nach einem der Ansprüche 1 bis 6,
   wobei die Partikel (4) in dem Kanal (6) gegenüber einer Scherrate ($\dot{\gamma}$) exponiert sind, die eine Tank-Treading-Partikelrotation mit einer Tank-Treading-Frequenz ($\omega_{tt}$) in dem Bereich von 0,1 Hz bis 1000 Hz, bevorzugter 1 Hz bis 20 Hz, induziert.

8. Verfahren nach einem der Ansprüche 1 bis 7,
   wobei eine Partikelverformung ($\varepsilon$) aus der Form eines entsprechenden Partikels, insbesondere aus seinen Abmessungen (a, b) in der Bildebene, bestimmt wird.

9. Verfahren nach einem der Ansprüche 1 bis 8,

wobei ein gemessenes Geschwindigkeitsprofil bestimmt wird, indem Partikel (4) über aufeinanderfolgende Bilder (12) verfolgt werden und ein Abstand, über den sie sich in der Längsrichtung (L) bewegt haben, durch eine Zeitdifferenz zwischen den Bildern (12) geteilt wird, und wobei ein angepasstes Geschwindigkeitsprofil durch Integrieren einer Scherrate ($\dot{\gamma}$) über die seitliche Ausdehnung (E) des Kanals (6) erhalten wird und anschließend mehrere Viskositätsparameter iterativ durch Minimieren der Differenz des angepassten und des gemessenen Geschwindigkeitsprofiln bestimmt werden.

10. Verfahren nach einem der Ansprüche 1 bis 9,
wobei die Partikel Zellen sind, insbesondere lebende Zellen.

11. Verfahren nach einem der Ansprüche 1 bis 10,
wobei die Viskosität ($\eta$) des Suspensionsmediums (10) auf der Grundlage von Analysieren der Bilder (12) bestimmt wird.

12. Verfahren nach einem der Ansprüche 1 bis 11,
wobei die viskoelastischen Eigenschaften bei einem entsprechenden Wert eines Tank-Treading-Parameters eines entsprechenden Partikels (4) bestimmt werden und auf eine Referenz zum Vergleich verschiedener Partikel (4), die unterschiedliche Werte des Tank-Treading-Parameters erfahren haben, skaliert werden.

## Revendications

1. Procédé permettant de déterminer un certain nombre de propriétés viscoélastiques, en particulier la rigidité (k) et la fluidité ($\alpha$), d'un certain nombre de particules (4) d'une suspension,

- dans lequel la suspension comprend un milieu de suspension (10) dans lequel les particules (4) sont en suspension,
- dans lequel ladite suspension est introduite par un canal (6), ledit canal (6) s'étendant dans une direction longitudinale (1) et ayant une extension latérale (E) perpendiculaire à ladite direction longitudinale (1),
- dans lequel l'extension latérale (E) est au moins 5 fois le diamètre moyen des particules (4),
- dans lequel des images (12) provenant des particules (4) dans le canal (6) sont enregistrées avec une unité de formation d'images (8) et dans un plan de formation d'images à mesure que les particules (4) s'écoulent par le canal (6) à une différence de pression ($\Delta$P) constante entre un orifice d'entrée et un orifice de sortie du canal (6),
- dans lequel un certain nombre de propriétés de particules est déterminé par analyse des images (12) et dans lequel les propriétés viscoélastiques des particules (4) sont dérivées desdites propriétés de particules,
- dans lequel les particules (4) à l'intérieur du canal (6) sont exposées à une contrainte de cisaillement ($\sigma$) déformant la forme d'une particule (4) respective en fonction de sa distance (D) au centre de canal (14),
- dans lequel le canal (6) est conçu de telle sorte que la contrainte de cisaillement ($\sigma$) de part et d'autre d'une particule (4) respective varie au plus d'une variation maximale (V), pour permettre une approximation constante de la contrainte de cisaillement ($\sigma$) lors de la dérivation des propriétés viscoélastiques, **caractérisé en ce que**
- le milieu de suspension (10) est non newtonien,
- la contrainte de cisaillement ($\sigma$) pour une particule (4) respective est calculée uniquement à partir de la pression ($\Delta$P) sur le canal (6), d'une géométrie de canal et d'une position latérale (x, y) de la particule (4) respective, qui sont obtenues en analysant les images (12).

2. Procédé selon la revendication 1,
dans lequel le canal (6) dans la direction longitudinale (1) a une longueur (Le) d'au moins 1 cm à 10 cm.

3. Procédé selon la revendication 1 ou 2,
dans lequel le canal (6) a une section transversale, qui est constante sur toute la longueur (Le) du canal (6).

4. Procédé selon l'une quelconque des revendications 1 à 3,
dans lequel l'extension latérale (E) est supérieure à 75 $\mu$m.

5. Procédé selon l'une quelconque des revendications 1 à 4,
dans lequel la variation maximale (V) est d'au plus 10 %.

6. Procédé selon l'une quelconque des revendications 1 à 5,

dans lequel la suspension est introduite par le canal (6)

   - avec une pression ($\Delta$P) de 0,5 bar à 6 bars et/ou
   - avec un gradient de pression dans la plage de 0,05 bar/cm à 5 bars/cm.

**7.** Procédé selon l'une quelconque des revendications 1 à 6,
dans lequel les particules (4) dans le canal (6) sont exposées à un taux de cisaillement ($\dot{\gamma}$) qui induit une rotation de particule à mouvement de chenille de char avec une fréquence de mouvement de chenille de char ($\omega_{tt}$) dans la plage de 0,1 Hz à 1000 Hz, plus préférablement de 1 Hz à 20 Hz.

**8.** Procédé selon l'une quelconque des revendications 1 à 7,
dans lequel une contrainte de particule ($\varepsilon$) est déterminée à partir de la forme respective d'une particule, en particulier à partir de ses dimensions (a, b) dans le plan de formation d'image.

**9.** Procédé selon l'une quelconque des revendications 1 à 8,

dans lequel un profil de vitesse mesuré est déterminé en suivant des particules (4) sur des images (12) suivantes et en divisant la distance qu'elles ont parcourue dans la direction longitudinale (L) par une différence de temps entre lesdites images (12) et
dans lequel un profil de vitesse ajusté est obtenu en intégrant un taux de cisaillement ($\dot{\gamma}$) sur l'extension latérale (E) du canal (6) et ensuite un certain nombre de paramètres de viscosité est déterminé de manière itérative par réduction au minimum de la différence de la vitesse ajustée par rapport au profil de vitesse mesuré.

**10.** Procédé selon l'une quelconque des revendications 1 à 9,
dans lequel les particules sont des cellules, en particulier des cellules vivantes.

**11.** Procédé selon l'une quelconque des revendications 1 à 10,
dans lequel la viscosité ($\eta$) du milieu de suspension (10) est déterminée sur la base de l'analyse des images (12).

**12.** Procédé selon l'une quelconque des revendications 1 à 11,
dans lequel les propriétés viscoélastiques sont déterminées à une valeur respective d'un paramètre de mouvement de chenille de char d'une particule (4) respective et sont mises à l'échelle d'une référence pour une comparaison de différentes particules (4) ayant subi différentes valeurs du paramètre de mouvement de chenille de char.

Fig. 1

Fig. 2

Fig. 3

Fig. 4

Fig. 5

Fig. 6

$y, a, b, v, \beta, \omega_{tt}, \Delta P$

22

$t_1$     4     $t_2$     4

$y, D$

$x_1$     $x_2$

$v = dx/dt$     14

$\sigma$

$y, \Delta P \longrightarrow \sigma$

$y, D$

$v$

$v(y) \longrightarrow \eta_0, \tau, \delta$

$\longrightarrow \eta, \dot{\gamma}$

$y, D$

$y, a, b, \beta \longrightarrow G'$

$y, a, b, v, \beta, \omega_{tt}, \eta \longrightarrow G''$

$G', G'' \longrightarrow k, \alpha$

## Fig. 7

Fig. 8

Fig. 9

Fig. 10

Fig. 11

Fig. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3036520 B1
- DE 102017008946 A1
- DE 102018221232 A1
- JP H0368867 A


**Non-patent literature cited in the description**

- **GOSSETT et al.** Hydrodynamic stretching of single cells for large population mechanical phenotyping. *National Academy of Sciences*, 2012, vol. 109, 6
- **OTTO et al.** Real-time deformability cytometry: on-the-fly cell mechanical phenotyping. *Nat Methods*, 2015, vol. 12 (3), 199-202
- **PANHWAR et al.** High-throughput cell and spheroid mechanics in virtual fluidic channels. *Nature Communications*, 2020, vol. 11 (1)
- **QI et al.** Screening cell mech-anotype by parallel microfiltration. *Scientific Reports*, 2015, 5
- **LANGE et al.** Mi-croconstriction Arrays for High-Throughput Quantitative Measurements of Cell Mechanical Properties. *Biophys J*, 2015, vol. 109 (1), 26-34
- **LANGE et al.** Unbiased High-Precision Cell Mechanical Measurements with Microconstrictions. *Biophys J*, 2017, vol. 112 (7), 1472-1480
- **DE LOUBENS CLEMENT et al.** Tank-treading of microcapsules in shear flow Tank-treading of microcapsules in shear flow. *Journal of Fluid Mechanics*, 26 January 2016, 750-767
- **ROSCOE, R.** On the rheology of a suspension of viscoelastic spheres in a viscous liquid. *J.Fluid Mechanik*, 1967, 21